# EUROPEAN PATENT APPLICATION

(11) **EP 2 207 009 A2**
(43) Date of publication of application: **14.07.2010**
(21) Application number: 10004423.9
(22) Date of filing: 08.06.2007
(51) Int. Cl.: G01B 21/04, G01B 5/00, G01D 5/347, B25J 17/02

(54) **Extendable leg assembly for a position measurement apparatus**

(30) Priority: 16.06.2006 GB 0611985
(62) Divisional of application: 07733158.5
(71) Applicant: Renishaw plc, Wotton-under-Edge Gloucestershire GL12 8JR (GB)
(72) Inventor: Evans, Finlay Jonathan, Colerne, Wiltshire, SN14 8DF (GB); McMurtry, David Roberts, Dursley, Gloucestershire GL11 6AT (GB)
(74) Representative: Dunn, Paul Edward

(57) **Abstract**

An extendable leg assembly (8;30) for a measuring machine, such as a co-ordinate measuring machine, is described. The extendable leg assembly (8;30) has a first end and a second end and comprises a metrology structure for measuring the separation between the first end and the second end. The metrology structure is substantially mechanically isolated from the load carrying path and may comprise one or more elongate metrology members (44,46;76,78) having a low coefficient of thermal expansion. The extendable leg assembly (8;30) may be attached to one or more platforms (4,6;36,38) by a pivot joint.

## Description

The present invention relates to measuring machines and in particular to non-Cartesian measuring machines such as hexapod co-ordinate measurement machines (CMMs) and the like. In particular, the invention relates to extendable leg assemblies for such machines.

A variety of non-Cartesian machines are known. For example, hexapod arrangements are described in US5028180 and US5604593. In particular, US5028180 describes a hexapod machine tool comprising an upper, moveable, platform that is attached to a base by six hydraulic extendable legs. The extendable legs are attached to the base and moveable platform via trunnion or Hooke's joints. The extendable legs are hydraulic and comprise a piston rod that is moveable within a cylinder. The amount of leg extension is measured by mounting a magnetic scale to the cylinder and a suitable readhead on the piston rod. Extension of the leg thus causes the scale to move past the readhead thereby allowing the length of the leg to be measured. A computer controller acts to set the length of each leg to provide the required platform movement. US5604593 describes a variant of the above described hexapod apparatus in which the length of each extendable leg is measured interferometrically.

According to a first aspect of the invention, there is provided an extendable leg assembly having a first end and a second end, the extendable leg assembly comprising a load bearing structure providing a load carrying path from the first end to the second end and a metrology structure for measuring the separation between the first end and the second end, wherein the metrology structure is substantially mechanically isolated from the load carrying path. Advantageously, the metrology structure comprises at least one elongate metrology member. The at least one elongate metrology member may have a low coefficient of thermal expansion.

The present invention thus provides an extendable leg assembly that may be used as part of a measuring machine. The measuring machine may be a co-ordinate measuring machine (CMM) or, more preferably, a non-Cartesian CMM such as a hexapod or tripod. The leg assembly of the present invention is extendable such that the separation between its first and second ends can be varied. Metrology apparatus or metrology means are also provided to allow the separation between the first and second ends to be measured. The metrology apparatus thus preferably comprises at least one elongate metrology member (e.g. a rod or flattened layer of material) that has a low coefficient of thermal expansion.

In prior art hexapod apparatus of the type described above, the extendable legs typically comprise pistons or electronic drive motors that act to extend and retract each leg as required. Typically, each leg also comprises some means for measuring the amount of leg extension. For example, US5028180 describes hydraulic extendable legs that comprise a piston rod moveable within a cylinder. The amount of leg extension is measured by mounting a magnetic scale to the cylinder and a suitable readhead on the piston rod. Extension or retraction of the leg thus causes the scale to move past the readhead thereby allowing the length of the leg to be determined.

A disadvantage of arrangements of the type described in US5028180 is that any thermal expansion of the piston rod and cylinder causes the length of the extendable leg to vary. However, such a thermally induced variation in leg length will not be detected as there will be no relative movement induced between the scale and the readhead. This leads to errors in the measurement of leg length and hence introduces inaccuracies when measuring the co-ordinates of the surface of an object.

Although US5604593 reduces some thermal expansion effects by exploiting interferometric measurements of the leg length, such an arrangement is complicated to implement and subject to errors due to vibration and optical misalignment. Furthermore, thermal expansion of the laser or retroreflector mounting can introduce analogous errors to those associated with the apparatus of US5028180.

Also described herein is an extendable leg assembly that comprises at least one elongate metrology member formed from material having a low coefficient of thermal expansion such that it is substantially unaffected by any thermal expansion that may occur in the rest of the leg assembly. Any thermal expansion of the leg assembly is thus measured and incorporated in the co-ordinate measurements taken by the machine. This is an advantage over prior art apparatus of the type described above in which such thermal expansion effects are unmeasurable. The arrangement of the present invention also permits the majority of the leg assembly to still be formed from standard, low cost, readily machinable material, such as Aluminium.

Advantageously, the at least one elongate metrology member has a coefficient of thermal expansion less than 15ppm/°C, more preferably less than 10ppm/°C, more preferably less than 5ppmJ°C, more preferably less than 3ppm/°C, more preferable less than 2ppm/°C, or more preferably less than 1ppm/°C.

The at least one elongate metrology member may conveniently be formed from INVAR (TM) which is a nickel-iron alloy that has a coefficient of thermal expansion of around 0.5-1.5ppm/°C depending on its exact composition. Alternatively, the at least one elongate metrology member may be formed from a glass ceramic material such as ZERODUR (TM). ZERODUR has a coefficient of thermal expansion of around 0.02ppm/°C or less depending on the exact composition. Such low thermal expansion coefficients can be seen to be more than an order of magnitude less than those of traditional materials such as Aluminium (23ppm/°C) or brass (19ppm/°C).

The extendable leg assembly conveniently comprises a load bearing structure extending from the first end to the second end. Conveniently, the one or more elongate metrology members have a lower coefficient of thermal expansion than the load bearing structure. Conveniently, the load bearing structure provides a load carrying path through the leg assembly. The one or more elongate metrology members are preferably substantially mechanically isolated from the load carrying path. In other words, the metrology apparatus is arranged such that it carries none of the load that is carried by the extendable leg assembly.

Advantageously, the load bearing structure comprises a first portion and a second portion, the first portion being moveable relative to the second portion. Conveniently, the load bearing structure is a telescopic load bearing structure in which the first portion is slideably mounted within the second portion. For example, the load bearing structure may comprise one or more elongate or tubular portions; additional load bearing support may be provided within the tubular portions if required. A telescopic arrangement may then be provided having an inner tubular portion that is slideable within an outer tubular portion.

Advantageously, the extendable leg assembly comprises a driving mechanism or drive means for extending and retracting the leg assembly as required. The driving mechanism may be pneumatic, hydraulic or include an electric motor. Preferably, a belt drive arrangement is provided. The drive means may be arranged to operate under the control of an associated controller such as computer controller.

First and second pivot joints (e.g. ball and socket joints) may be provided at the first and second ends of the extendable leg to provide an attachment or mechanical coupling to associated platforms. The ball or socket may be provided on the platform. The extendable leg may conveniently comprise a first elongate metrology member having a first end that is located in the vicinity of the ball of the first ball joint. The extendable leg may also comprise a second elongate metrology member having a first end that is located in the vicinity of the ball of the second ball joint. Longitudinal movement of the first and second elongate metrology members is preferably constrained only in the vicinity of the ball joints. In other words, the remainder of each elongate metrology member (i.e. any part of the metrology member away from the joint) is substantially free to move longitudinally relative to the rest of the leg assembly.

Advantageously, the load bearing structure comprises at least one socket for engaging an associated ball to form a pivot joint. Advantageously, a first socket may be provided at the first end of the extendable leg and/or a second socket may be provided at the second end of the extendable leg. Each of the first and/or second sockets may be suitable for attachment to complimentary balls (e.g. a ball fixed to a platform) such that ball joints can be formed. The leg assembly may comprise an elongate metrology member attached to the load bearing structure at or near the at least one socket. For example, the first end of a first elongate metrology member may conveniently be attached to the first socket and the first end of a second elongate metrology member may conveniently be attached to the second socket. Apart from the attachment at the sockets, the first and second elongate metrology members are advantageously free to move longitudinally.

Conveniently, the at least one socket comprises a hollow channel through which an elongate metrology member can pass to make direct contact with the associated ball. For example, the first socket may comprise a hollow channel that, in use, permits the first end of the first elongate metrology member to make direct contact with the ball of the ball joint. Similarly, the second socket may comprise a hollow channel that, in use, permits the first end of the second elongate metrology member to make direct contact with the ball of its ball joint. In this manner, the first ends of the elongate metrology member are maintained in direct contact with the balls of the respective ball joints. In such an arrangement, the metrology members are not longitudinally constrained by the first or second sockets but directly contact the ball of the ball sockets. A bias may also be provided to bias an end of an elongate metrology member into contact with the associated ball.

Each of the one or more elongate metrology members is advantageously longitudinally (axially) constrained by the load bearing structure of the leg assembly at no more than one location. In other words, each elongate metrology member may conveniently be longitudinally constrained at a single point along its length (e.g. at or near the first or second end of the leg assembly) or only by the associated ball of the ball joint (i.e. by no part of the leg assembly at all).

Although longitudinal constraint of each elongate metrology member along its length is preferably avoided, such metrology members may be constrained laterally at a plurality of locations if required. For example, the elongate metrology members may be affixed to the surrounding structure of the leg assembly in a manner that permits relative longitudinal movement (i.e. movement in the direction of leg expansion and contraction) but prevents radial movements. For example, a soft foam layer may be used to attach an elongate metrology member to the surrounding (possibly load bearing) structure. The surrounding structure may be formed of Aluminium whilst the elongate metrology member has a lower coefficient of thermal expansion (e.g. it may comprise INVAR). The foam layer thus permits the Aluminium to expand without inducing a corresponding deformation of the (INVAR) elongate metrology member.

As outlined above, the leg assembly may comprise first and second metrology members. These metrology members are preferably arranged such that any variation in the separation between the first end and the second end of the leg assembly causes movement of the first metrology member relative to the second metrology member. The first elongate metrology member may be arranged to define or carry a scale. An appropriate readhead suitable for reading such a scale may be mounted at or near the second end of the second elongate metrology member. The first and second elongate metrology members may be arranged such that extension or retraction of the leg causes the scale to move relative to the readhead. As noted above, movement of the first and second elongate metrology members may be longitudinally constrained only in the vicinity of the pivot (ball) joints. Consequently, thermal expansion of the load bearing structure will also cause such relative movement between the scale and readhead. The arrangement thus permits thermal expansion effects of the extendable leg to be measured in addition to any driven or load induced leg expansion/retraction.

The scale and readhead used to measure relative movement between the first and second elongate metrology members may be of any known type. For example, an optical, magnetic or inductive scale and readhead arrangement may be used. Preferably, the scale is formed as a series of light and dark lines in the material of the first elongate metrology member and the readhead comprises an incremental optical sensor for sensing movement of such lines past the readhead. A person skilled in the art would be aware of the various types of scale and readhead that would be suitable for such an application.

As noted above, a load bearing structure may be provided that extends between the first and second ends of the extendable leg. The load carried by the load bearing structure may then be coupled to the associated platforms through the first and second pivot (ball) joints. Conveniently, the first and second sockets thus form part of the load bearing structure and the load path through the apparatus passes through the first and second pivot joints.

Instead of using ball joints in both the metrology and load bearing paths, it is possible to use the ball joints only for locating the first ends of the elongate metrology members relative to the platform. The load bearing structure may be independently coupled to the platform via a different route. Advantageously, a combination pivot joint assembly may thus be provided at the first and/or second ends of the extendable leg. The pivot joint assembly advantageously comprises; a multi-axis revolute joint portion providing rotational movement about two or more revolute axes, said two or more revolute axes substantially intersecting at an intersection point; and a ball joint portion comprising a ball located in the vicinity of said intersection point. In other words, each combination pivot joint may comprise a ball joint portion and a Hooke's joint portion. The ball joint portion may be used for metrology purpose (e.g. the first end of an elongate member may terminate at, or near, the ball of such a ball joint) whilst the Hooke's joint may carry the mechanical load (e.g. of the load bearing structure). In this manner, the metrology advantages (i.e. accuracy) of ball joints are combined with the load carrying advantages (low friction) of multi-axis revolute joints. Such an arrangement also reduces metrology errors that may arise if a high load is carried that causes deformations of the joint.

Advantageously, the combination pivot joint assembly is arranged such that the centre of rotation of the ball joint is substantially coincident with the centre of rotation of the multi-axis revolute joint portion. Preferably, the combination pivot joint assembly permits two, or more, extendable legs to be attached to a single ball.

Alternatively, the centres of rotation of the Hooke's joint and the ball joint may be spaced apart. Such a combination pivot joint assembly is described in more detail in Applicant's co-pending international (PCT) patent application (agent's ref: 731) that has a common priority claim with the present application.

Conveniently, a similar pivot joint is provided at each end of the extendable leg for convenience. However, different types of joint may be provided at each end of the extendable leg if required.

The present invention thus provides an extendable leg assembly having a first end and a second end, the first and second ends being linked by a (extendable) load bearing structure. A metrology structure may also be provided for measuring the separation of the first and second ends, wherein the metrology structure is substantially mechanically isolated from the load carrying path. Preferably, the load bearing structure only mechanically constrains the metrology structure in a longitudinal direction in the vicinity of the first and second ends. Advantageously, the metrology structure has a lower coefficient of thermal expansion than the load bearing structure. For example, the metrology structure may have a low coefficient of thermal expansion as described above. Such an arrangement ensures that thermal expansion of the load bearing structure does not distort the metrology structure and permits any thermal expansion of the load bearing structure to be measured.

Although the above described extendable leg assemblies are illustrated herein in the context of non-Cartesian measuring machine, it should be noted that they may also be advantageously used in a wide variety of alternative applications.

A combination joint for a measuring machine is also described herein, the combination joint comprises a Hooke's joint portion and a ball joint portion. Advantageously, the combination joint is arranged such that the centre of rotation of the ball joint is substantially coincident with the centre of rotation of the Hooke's joint. The first part of a combination joint is also described, the first part comprising a ball and a first Hooke's assembly. A second part of a combination joint may also be provided, the second part comprising a socket for engaging said ball of the first part and a second Hooke's assembly, wherein the second assembly can be combined with the first assembly of the first part to form a Hooke's joint.

A non-Cartesian machine is also described herein that comprises a pair of relatively moveable platforms, wherein a plurality of powered extendable legs and a plurality of extendable measurement legs extend between said platforms, **characterised in that** said powered extendable legs are attached to the platforms by Hooke's joints and the extendable measurement legs are attached to the platforms by ball joints. The Hooke's joints thus carry the load applied by the powered legs, whilst the ball joints provide higher accuracy for the measurement legs of the metrology structure. A machine, e.g. a hexapod, may thus be provided that has separate measurement legs and powered legs. The measurement legs may be arranged to be substantially parallel to the powered legs. Alternatively, the measurement and powered legs may be provided in different configurations. A computer or other controller may be provided to control the powered extendable legs and also to receive measurement from the extendable measurement legs.

The invention will now be described, by way of example only, with reference to the accompanying drawings in which;
Figure 1 shows a hexapod co-ordinate measurement machine,
Figure 2 illustrates the principle of operation of an extendable leg of the present invention,
Figure 3 illustrates a further extendable leg assembly of the present invention,
Figure 4 illustrates a joint for attaching an extendable leg to a platform,
Figure 5 illustrates an alternative joint for attaching an extendable leg to a platform,
Figure 6 illustrates an alternative joint for attaching a extendable leg to a platform in which the metrology and load bearing functions are separated,
Figure 7 illustrates a further joint allowing two legs to be attached to a platform,
Figure 8 shows a variant of the socket shown in figure 4,
Figure 9 shows a variant of the socket shown in figure 5, and
Figure 10 illustrates how separate metrology and load bearing legs may be provided.

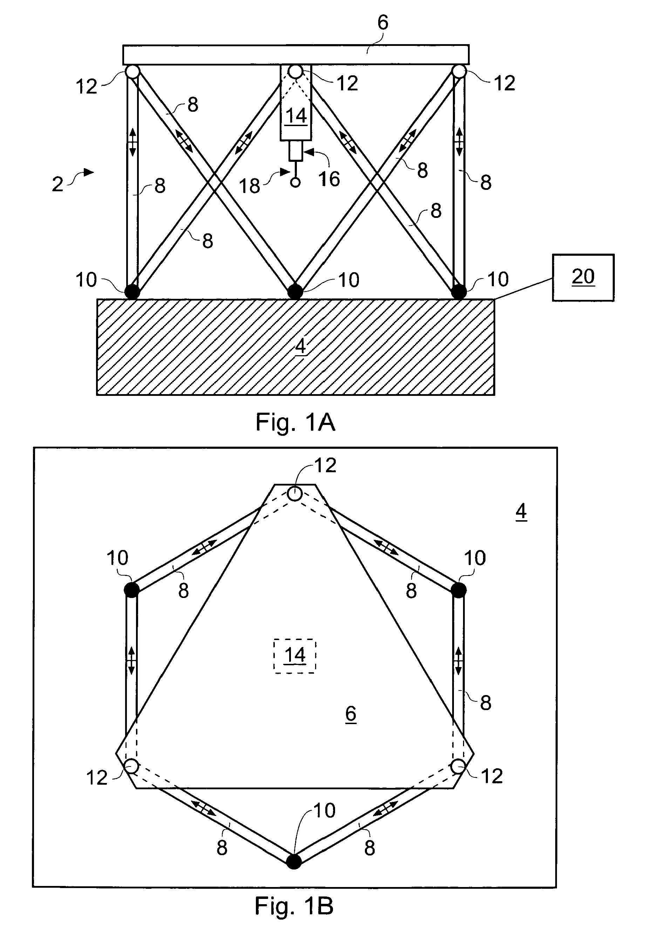

Referring to figure 1, a hexapod co-ordinate measurement machine (CMM) is shown. The hexapod CMM 2 comprises a base platform 4 and a moveable platform 6 that are spaced apart by six extendable legs 8. Three ball joints 10 are provided on the base 4 and three ball joints 12 are provided on the platform 6. Each ball joint is attached to the end of two of the extendable legs. A quill 14 is mounted to the underside of the platform 6 and is arranged to retain a measurement probe 16 having a stylus 18 with a spherical stylus tip. The measurement probe may be a touch trigger probe or any measurement probe of known type.

The length of each extendable leg 8 is controlled by an associated computer controller 20. Altering the length of the various legs allows the platform 6, and hence the quill 14, to be moved relative to the base. This arrangement allows the form of an object (e.g. a workpiece) located on the base 4 to be measured.

As outlined above, it has been realised that improved measurement of the length of an extendable leg can be obtained by separating the metrology and load bearing functions of the extendable leg. In other words, thermal expansion in the load bearing structure can be mechanically isolated from a metrology structure that is formed from material having a low coefficient of thermal expansion.

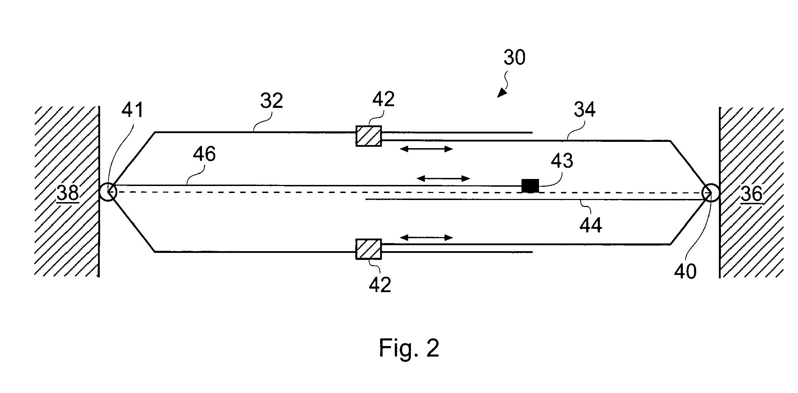

Referring to figure 2, the basic principle of an extendable leg 30 of the present invention is illustrated.

The extendable leg 30 comprises an outer tubular portion 32 and an inner tubular portion 34. The inner tubular portion 34 is slidable within the outer tubular portion 32 thereby forming a telescopically extendable leg. The outermost ends of the inner and outer tubular portions are attached to a first platform 36 and a second platform 38 via a first ball joint 40 and a second ball joint 41 respectively. Each ball joint comprises a ball and a socket; the ball is fixedly attached to the platform whilst the socket is provided on the end of the extendable arm. A drive means 42 provides expansion and contraction of the leg as required. Although inner and outer tubular portions are shown in figure 2, it should be noted that any kind oftelescopic arrangement may be provided.

The drive mechanism or drive means 42 is illustrated schematically in figure 2 and may comprise any arrangement that introduces relative axial motion between the inner and outer tubular portions. For example, the drive means may be a hydraulic piston, screw jack or it may comprise an electronic drive arrangement. In use, the drive means 42 causes expansion and contraction of the extendable leg thereby urging the first and second platforms apart, or pulling them together, as required. Any load applied is transmitted through the extendable leg 30 via the tubular portions.

In addition to the tubular (load bearing) portions, the extendable leg also comprises a separate metrology structure. The metrology structure comprises a first metrology member 44 and a second metrology member 46.

The first metrology member 44 comprises an elongate member on which an optical scale is formed. The first end of the first metrology member 44 is attached to, or attached to a structure that is as close as possible to, the ball of the first ball joint 40. The second end of the first metrology member 44 is free to move longitudinally, although it may be supported by the surrounding inner tubular portion 34 so as to prevent radial movements. The only point at which axial movement of the first metrology member is constrained is thus in the vicinity of the first ball joint 40; the rest of the first metrology member is free to move axially relative to the surrounding structure of the extendable leg.

The second metrology member 46 is also in the form of an elongate member. The first end of the second metrology member 46 is attached to, or attached to a structure that is as close as possible to, the ball of the second ball joint 41. The second end of the second metrology member 46 carries an optical readhead 43 that is suitable for reading the optical scale of the first metrology member 44. The second end of the second metrology member 46 is free to move longitudinally, although it may be supported by the surrounding outer tubular portion 32 so as to prevent radial movements. The only point at which axial movement of the second metrology member is constrained is thus in the vicinity of the second ball joint 41; the rest of the second metrology member is free to move axially relative to the surrounding structure of the extendable leg.

The first and second metrology members are predominantly fabricated from a material having a low coefficient of thermal expansion. For example, they may comprise INVAR (TM) or ZERODUR (TM); both of which are available commercially.

The metrology structure described above allows the separation between the first and second ball joints to be measured. Unlike prior art devices, the scale and readhead are not directly mechanically coupled to the tubular portions of the extendable leg along their lengths. Instead, each member is only linked to the tubular portions at one location; for example, in the vicinity of the end of the leg. Although thermal expansion of the tubular portions will cause the length of the leg to increase, such an increase will also cause measurable movement of the first metrology member relative to the second metrology member. Similarly, if the extendable legs are stretched or compressed by the application of a static or dynamic force there will also be a measurable movement of the first metrology member relative to the second metrology member. The accuracy of the metrology (i.e. measurement of the leg length) is thus unaffected by thermal expansion of, or forces that are applied to, the tubular portions of the leg. Although an optical scale and readhead arrangement is shown in figure 2, it should be noted that non-optical position encoders (e.g. magnetic or capacitance systems) could alternatively be used.

The extendable leg 30 thus has integral metrology means or apparatus for measuring its length that are unaffected by any thermal expansion or contraction of the main load bearing structure. It can thus be seen that the arrangement provides a metrology structure through which no load is transmitted. In other words, the extendable leg 30 could be said to comprise a load bearing structure (i.e. the tubular portions 32 and 34) that is separate from the metrology structure (i.e. the metrology members 44 and 46).

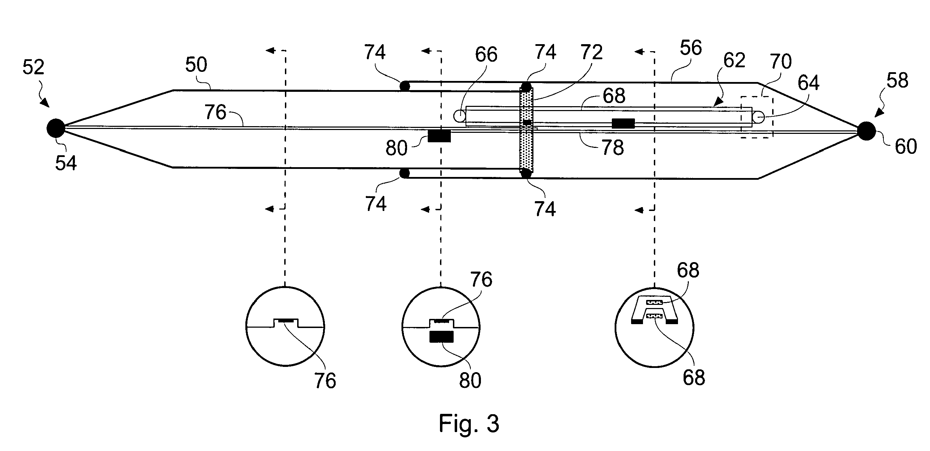

Referring to figure 3, a more detailed illustration of a powered extendable leg of the present invention is provided. Various cross-sectional views through the leg are also provided.

The extendable leg comprises an inner tubular portion 50 having a first end 52 connected to a first platform via a first ball joint 54. The extendable leg also includes an outer tubular portion 56 that has a first end 58 connected to a second platform via a second ball joint 60. The second end of the inner tubular portion 50 is located within the outer tubular portion 56 to form a slideable, telescopic, leg arrangement.

An internal support strut 62 is also located within the outer tubular portion 56. One end of the strut 62 is mechanically coupled to the second ball joint 60. The other end of the internal support strut 62 terminates at a position just short of the second end of the outer tubular portion 56. The internal dimensions of the inner tubular portion 50 are selected such that the internal support strut 62 slides within it.

The internal support strut 62 carries a belt drive having a first pulley 64 and a second pulley 66 around which a belt 68 is passed. A motor 70 is also provided to drive the first pulley 64 thereby driving the belt 68. The second end of the inner tubular portion 50 has an attachment member 72 which is secured to the belt 68. Movement of the belt 68 thus causes relative longitudinal movement of the inner and outer tubular portions. O-rings 74 are also provided to prevent any lateral movement of the inner and outer tubular portions.

A first metrology member 76 extends from the first end of the inner tubular portion (i.e. from the first ball joint 54). Movement of the first metrology member 76 is only longitudinally constrained in the vicinity of the first ball joint 54. However, said member is attached to an internal surface of the inner tubular portion 50 by a compliant foam layer such that any lateral movement is prevented.

A second metrology member 78 extends from the first end of the outer tubular portion (i.e. from the second ball joint 60). The second metrology member 78 comprises two parallel tracks that converge near the second ball joint 60 and also at a point near the end of the internal support strut 62. The second metrology member 78 is longitudinally constrained only in the vicinity of the second ball joint 60. However, lateral movement of the second metrology member 78 is prevented by attaching said member to the internal support strut 62 using a compliant foam layer.

A readhead 80 is mounted to the distal end of the second metrology member 78 and a scale is formed on the first metrology member 76. As the inner and outer tubular portions expand or retract, the scale moves relative to the readhead thereby providing a measure of any relative motion therebetween. As described above, such an arrangement allows any thermal expansion or any other deformation of the load carrying portion of the leg to be measured.

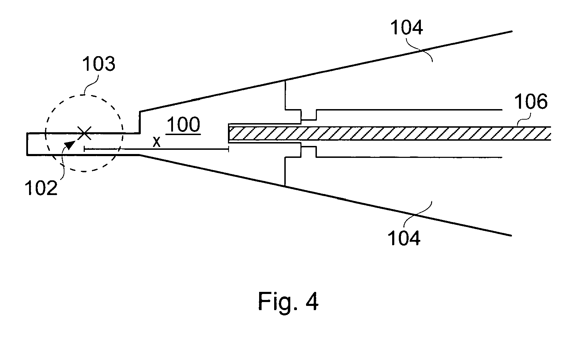

Referring to figure 4, a socket 100 is shown that is suitable for attaching separate metrology and load bearing portions of an extendable arm to a ball 103 that is fixed to a platform. The socket 100 and ball 103 would thus form a ball joint. In particular, the socket 100 is suitable for inclusion at each end of an extendable arm of the type described above with reference to figures 2 and 3.

The socket 100 comprises a ball contacting end portion 102 that provides three or more points of contact or a conical contact with an associated ball 103. The socket 100 is connected to both the load bearing structure 104 of the extendable arm (e.g. the inner or outer tubular portion of figure 2) and the metrology member 106 of the arm (e.g. the first or second metrology members of figure 2). The socket 100 is arranged such that the end of the metrology member 106 is located substantially in the vicinity of the ball 103.

The socket 100 thus mechanically couples both the metrology member 106 and the load bearing structure 104 to the ball 103. The metrology member 106 may be fixed axially relative to the load bearing structure 104 only at the socket. The rest of the metrology member 106 may then be free to move axially relative to the load bearing structure 104.

As outlined above, the metrology member 106 is made from a material having a low coefficient of thermal expansion (e.g. INVAR). In fact, the coefficient of thermal expansion of INVAR can, to a good approximation, be considered as zero for present purposes. The socket 100 is however made from bronze (which has an appreciable coefficient of thermal expansion) to provide sufficient mechanical robustness. There will thus be a small amount of thermal expansion arising from the small length (x) of bronze in the metrology path; i.e. between the metrology member 106 and the ball 103. However, the effect of such bronze material is minimal and can typically be ignored. Instead of bronze, any other suitably strong material (e.g. steel) may be used to provide the socket.

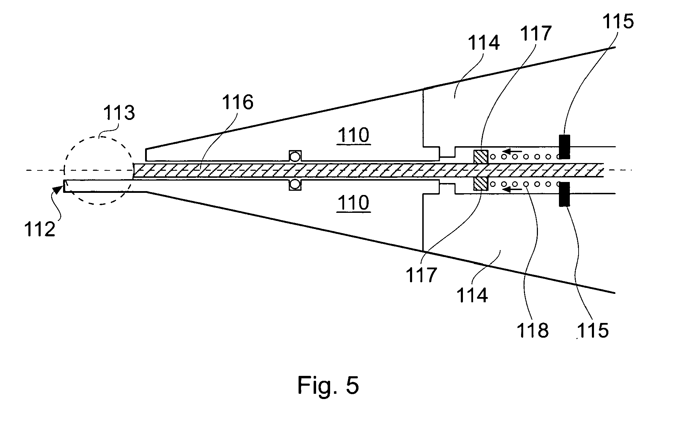

Referring to figure 5, an alternative socket 110 is illustrated. Socket 110 is formed from bronze and comprises a ball contacting end portion 112 that provides three or more points of contact with an associated ball 113. The socket 110 is also connected to the load bearing structure 114 of an extendable arm.

A central hollow core through the socket 110 is provided through which the metrology member 116 can be passed such that the end of the metrology member 116 makes direct contact with the ball 113. The load bearing structure 114 comprises an annular lug 115 fixed within the channel through which metrology member 116 passes. An annular lug 117 is also provided on the metrology member 116. A spring 118 located between lugs 115 and 117 biases the end of the metrology member 116 into contact with the ball.

In this arrangement, only the material of the metrology member is in the metrology path. In other words, the small amount of thermal expansion that is associated with the socket 100 described with reference to figure 4 above is removed thereby increasing measurement accuracy even further.

The above described examples illustrate how both the metrology and load bearing parts of an extendable arm can be separated in that arm. In particular, the above examples describe how the load bearing and metrology paths can come together in the vicinity of the socket, or at the ball, of a ball joint. It will now be described how a further improvement in performance can be obtained by separating out the joints that couple the metrology and load bearing paths of the extendable arm to the surface.

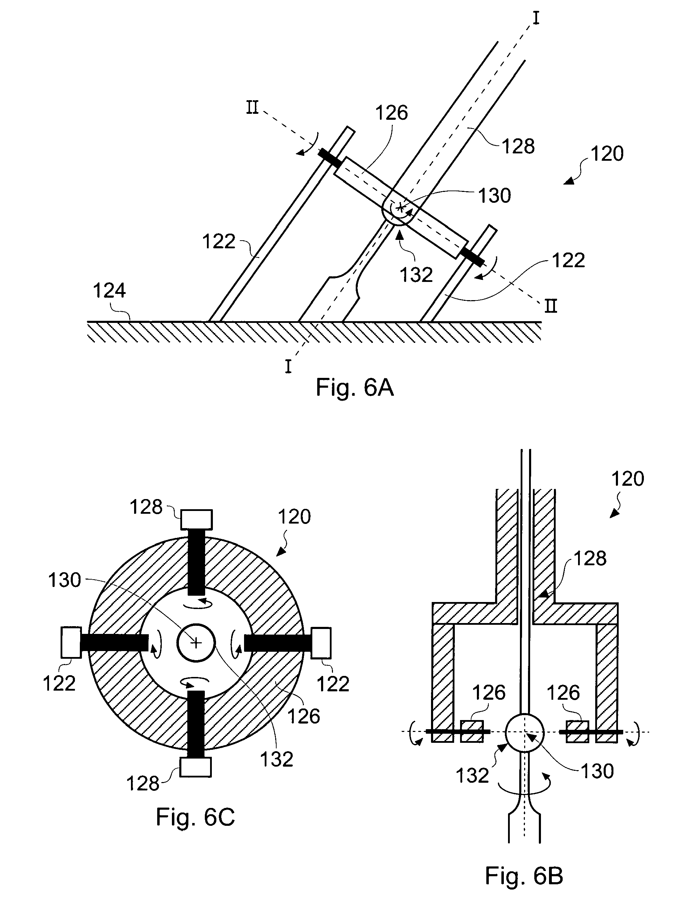

Referring to figure 6, a first example of a joint 120 providing a separate metrology and load bearing path to a surface is illustrated. In particular, figure 6a shows a side view of the joint 120, whilst figures 6b and 6c show cross-sectional views along lines I-I and II-II of figure 6a respectively.

Joint 120 comprises a pair of parallel arms or protrusions 122 that protrude from the surface of a platform 124. The pair of arms 122 are pivotally mounted to a ring-shaped component 126 at diametrically opposed locations. A Y-shaped load bearing member 128 is, in turn, pivotally mounted to the ring 126 at two diametrically opposed points via a further pair of arms or protrusions. This provides a so called Hooke's joint having two substantially intersecting revolute axes; the two revolute axes allowing pivoting substantially about a centre of rotation 130. The Hooke's joint carries the mechanical load from the load bearing member 128 to the platform 124. Although a ring-shaped component 126 is illustrated, such a component may take any form which allows the connection of the two pairs of protrusions and provides a central hole to allow clearance around a ball.

The joint 120 also comprises a ball 132 that is attached to the platform 124 and arranged such that its centre substantially coincides with the point of intersection of both revolute axes of the Hooke's joint. A metrology member 130 extends co-axially with the shaft of the load bearing member 128. The end of the metrology member 130 makes direct contact with the ball 132. A ball joint is thus provided purely for metrology purposes; i.e. no load is transmitted through the ball joint.

The joint 120 thus allows the load bearing structure and metrology member of an extendable arm to be coupled to a platform through different paths. In particular, the joint 120 provides a Hooke's joint for coupling the load from the arm to the platform; this takes advantages of the low friction and high load carrying capacity of such joint. The joint 120 also comprises a ball joint, which is inherently more accurate than a Hookes joint, to couple the metrology member to the platform. The joint 120 thus combines the advantages of Hooke's joints (i.e. low friction and high load capacity) with the metrology advantages of ball joints (i.e. high accuracy).

The joint 120 shown in figure 6 thus permits a single extendable arm of the type described above to be attached to a platform. It is, however, often desirable to provide a joint that can receive the ends of two or more different extendable legs. For example, such a joint would be required to implement the hexapod arrangement described with reference to figure 1.

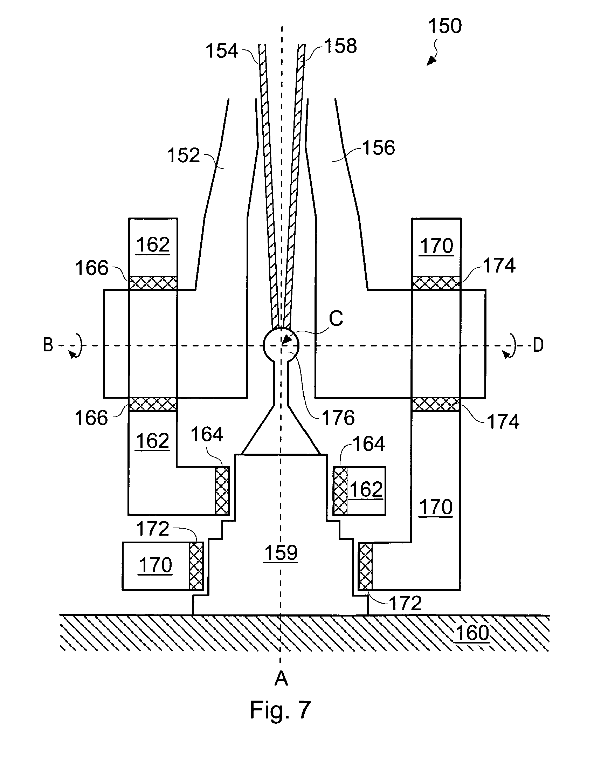

Referring to figure 7, a further joint 150 is shown for coupling two extendable legs to a platform 160.

The joint 150 is arranged to receive a first load bearing member 152 and a first metrology member 154 from a first extendable leg. A second load bearing member 156 and a second metrology member 158 are also received from a second extendable leg. The joint also comprises a central structure 159 that is anchored to the platform 160.

A first carriage 162 is mounted to the central structure 159 via bearings 164 in such a manner that it can rotate about a first axis of rotation A. The first load bearing member 152 carries a protrusion on its end such that it can be rotatably mounted to the first carriage 162 via bearings 166 such that it is rotatable about a second axis of rotation B. In this manner, the joint 150 allows the first load bearing member to rotate substantially about a centre C with two rotational degrees of freedom.

A second carriage 170 is also mounted to the central structure 159 via bearings 172 in such a manner that it is rotatable about an axis substantially co-axial to the first axis of rotation A. The second load bearing member 156 carries a protrusion on its end such that it can be rotatably mounted to the second carriage 170 via bearings 174 such that it is rotatable about an axis D that also substantially intersects centre point C. The joint 150 thus also allows the second load bearing member to rotate substantially about the centre C with two rotational degrees of freedom.

The central structure 159 also carries a ball 176 having a centre which is located to substantially coincide with the centre C. The first metrology member 154 and the second metrology member 158 make direct contact with the ball 176. Appropriate sockets (not shown) may be provided to keep the end of the metrology members 154 and 158 in contact with the ball 176 or they may be biased into contact with the ball such that ball contact is maintained under normal operating conditions.

Joint 150 thus allows the ends of two extendable arms of the type described above to be attached to a platform. The Hooke's joint arrangement provides the load bearing couplings whilst the metrology paths are provided via a ball joint. Although two extendable arms are illustrated, it should be noted that more than two arms may be provided if required.

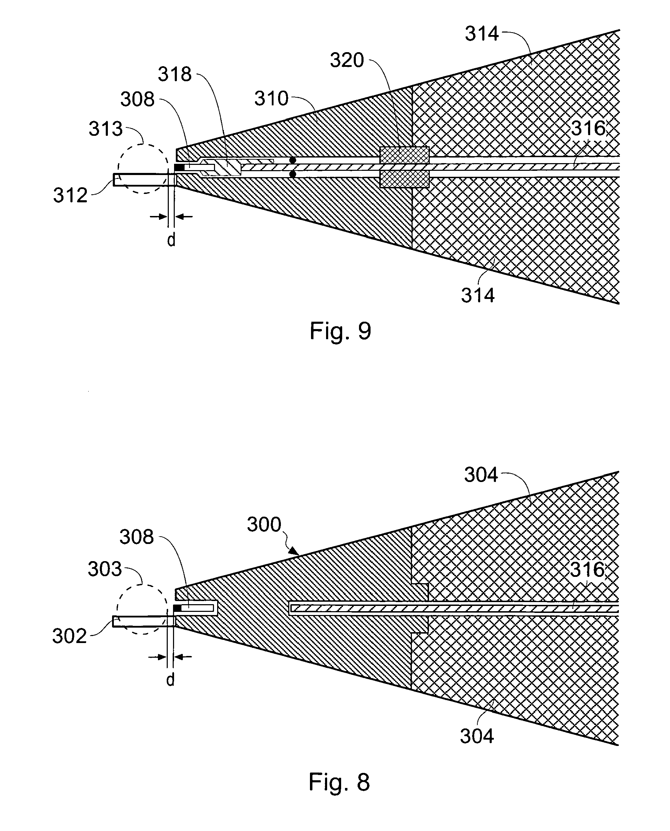

Referring to figures 8 and 9, variants of the sockets described with reference to figures 4 and 5 are illustrated in which additional non-contact distance measurement devices are provided.

Figure 8 shows a socket 300 attached to both the load bearing structure 304 and metrology member 306 of an extendable arm. The socket 300 also comprises a ball contacting end portion 302 for engaging an associated ball 303. A non-contact distance measuring device 308 is also retained by the socket 300 and is arranged to measure the distance d between the socket 300 and the ball 303. This ensure that the distance between the socket 300 and the ball 303 is always known to a high accuracy thereby further improving metrology performance.

Figure 9 shows a socket 310 having an end portion 312 for engaging a ball 313. The socket 310 is also connected to the load bearing structure 314 of an extendable arm. A hollow core through the socket 310 is provided through which a metrology member 316 can be passed. A bias mechanism 320 is arranged to bias the metrology member 316 towards the ball 313. The end of the metrology member 316 that is located within the core of the socket 310 carries a support structure 318 to which a non-contact distance measuring device 308 is attached. The non-contact distance measuring device 308 is arranged to measure the distance d between the socket 300 and the ball 303 thereby further increasing metrology performance.

The non-contact distance measuring device 308 described with reference to figures 8 and 9 above may comprise a capacitance sensor, an eddy current sensor or an optical sensor (e.g. a laser interferometer or laser triangulation device). It should also be noted that similar non-contact distance measuring devices may be included in joints of the type described with reference to figures 6 and 7.

Although a combined joint is described with reference to figures 6 and 7, it should be noted that separate (spatially separated) Hooke's and ball joints could be provided to achieve a similar effect.

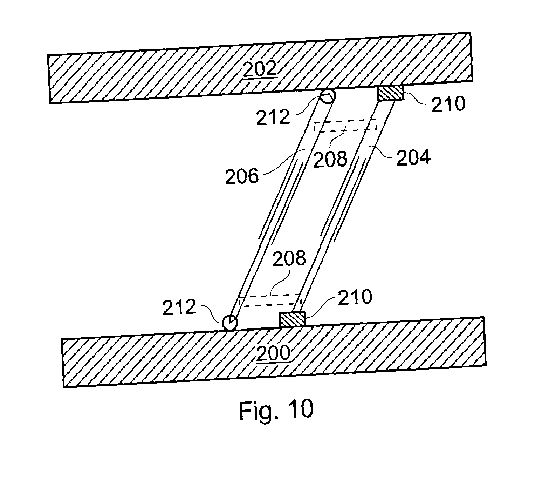

Figure 10 illustrates a first (e.g. base) platform 200 that is spaced apart from a second moveable platform 202. A powered extendable leg 204 and a metrology leg 206 are attached to both the first and second platform. The powered extendable leg 204 comprise a drive means (not shown) such that it can be extended or retracted as required. The metrology leg 206 comprises no such drive means but instead includes means for measuring its length. The metrology leg may comprise first and second metrology members of the type described above contained with a (non-powered) telescopic tubular housing. One or more linkages 208 may be provided to keep the powered leg 204 and metrology leg 206 parallel to each other during operation.

The powered extendable leg 204 is attached to both platforms via Hooke's joints 210 whilst the metrology leg 206 is attached to the platforms via ball joints 212. This arrangement allows the metrology benefits associated with ball joints to be combined with the low friction (low wear) benefits of Hooke's joints.

It should be noted a CMM would typically comprise a plurality of powered extendable legs and plurality of metrology legs. For example, a hexapod arrangement may be provided having six powered extendable legs and six metrology legs. Although each metrology leg may be adjacent and/or held parallel to a powered leg, this is not strictly necessary because any arrangement of the powered and metrology legs could be provided.

Any one or more of the various arrangements described with reference to figures 2 to 10 may be used when implementing a hexapod CMM of the type shown in figure 1. However, it should be remembered that figure 1 provides just one example of non-Cartesian measurement apparatus and numerous alternative arrangements may be implemented. For example, an improved access hexapod CMM is described in our co-pending International (PCT) patent application that claims the priority of British patent application No. 0611979.6. The legs and joints described above could be used in such alternative apparatus and may even be used in non-CMM arrangements. The skilled person would thus recognise the numerous and varied applications to which the apparatus described herein could advantageously be used.

## Claims

1. An extendable leg assembly having a first end and a second end, the extendable leg assembly comprising a load bearing structure providing a load carrying path from the first end to the second end and a metrology structure for measuring the separation between the first end and the second end, wherein the metrology structure is substantially mechanically isolated from the load carrying path.

2. An assembly according to claim 1, wherein the load bearing structure only mechanically constrains the metrology structure in a longitudinal direction in the vicinity of the first and second ends.

3. An assembly according to any preceding claim, wherein metrology structure comprises one or more elongate metrology members.

4. An assembly according to claim 3, wherein each of the one or more elongate metrology members is longitudinally constrained by the load bearing structure at no more than one location.

5. An assembly according to claim 4, wherein each of the one or more elongate metrology members is only longitudinally constrained at, or near, the first end or the second end of the leg assembly.

6. An assembly according to any one of claims 3 to 5, wherein each of the one or more elongate metrology members is laterally constrained by the load bearing structure at a plurality of locations.

7. An assembly according to any one of claim 3 to 6, wherein the one or more metrology members comprise a first metrology member and a second metrology member, wherein any variation in the separation between the first end and the second end of the leg assembly causes movement of the first metrology member relative to the second metrology member.

8. An assembly according to claim 7, wherein the first metrology member comprises a scale and the second metrology member comprises a readhead for reading the scale, wherein extension or retraction of the leg assembly causes the scale to move relative to the readhead.

9. An assembly according to any one of claims 3 to 8, wherein the at least one elongate metrology member is formed from at least one of a nickel-iron alloy, such as INVAR (TM), and a glass ceramic material such as ZERODUR (TM).

10. An assembly according to any preceding claim, wherein the load bearing structure comprises a first portion and a second portion, the first portion being moveable relative to the second portion.

11. An assembly according to claim 10, wherein the load bearing structure is a telescopic load bearing structure in which the first portion is slideably mounted within the second portion.

12. An assembly according to any preceding claim, wherein the load bearing structure is mechanically coupled to a first associated structure via a first pivot joint, the first pivot joint being located at the first end of the extendable leg assembly.

13. An assembly according to claim 12, wherein the load bearing structure is mechanically coupled to a second associated structure via a second pivot joint, the second pivot joint being located at the second end of the extendable leg assembly.

14. An assembly according to any preceding claim, comprising a driving mechanism for extending and retracting the leg assembly.

15. A co-ordinate measuring machine comprising a pair of relatively moveable platforms and a plurality of extendable leg assemblies according to any preceding claim that extend between said pair of platforms.
